# EUROPÄISCHE PATENTANMELDUNG

(11) **EP 1 462 232 A1**
(43) Veröffentlichungstag der Anmeldung: **29.09.2004**
(21) Anmeldenummer: 03006532.0
(22) Anmeldetag: 24.03.2003
(51) Int. Cl.: B29B 7/76, B29B 7/60, B01F 15/04

(54) **Vorrichtung zum Fördern von mindestens zwei Fluiden in einem bestimmten Volumenstrom-Verhältnis**

(71) Anmelder: TPH Technische Produkte Handelsgesellschaft mbh, 22335 Hamburg (DE)
(72) Erfinder: Tintelnot, Götz, 22605 Hamburg (DE)
(74) Vertreter: Rohnke, Christian, Dr.

(57) **Zusammenfassung**

Erfindungsgemäß ist eine Vorrichtung zum Fördern von mindestens zwei Fluiden, insbesondere Fluidkomponenten, in einem bestimmten Volumenstrom-Verhältnis der Fluide mit jeweils einer oszillierend angetriebenen Pumpe für die Förderung jeweils eines Fluids, dadurch gekennzeichnet, daß mindestens eine der Pumpen eine Übertragung der oszillierenden Antriebsbewegung aufweist, die einen Streckenanteil jeder Oszillation leer läuft.

## Beschreibung

Die vorliegende Erfindung betrifft eine Vorrichtung zum Fördern von mindestens zwei Fluiden, insbesondere Fluidkomponenten, in einem bestimmten Volumenstrom-Verhältnis der Fluide.

In der Technik stellt sich immer wieder die Aufgabe, zwei Fluide in einem bestimmten Volumenstrom-Verhältnis zu fördern. Zum Beispiel bei der Verarbeitung von Zwei- oder Mehr-Komponenten-Werkstoffen tritt diese technische Aufgabe auf, bei der die Komponenten-Fluide, insbesondere Flüssigkeiten, getrennt von einander transportiert und gelagert und erst zur Verarbeitung zusammengeführt werden. Hier sei als ein Beispiel, auf das die Erfindung aber nicht eingeschränkt ist, die Verarbeitung von Zwei-Komponenten-Injektionsmaterial zur Sanierung von Bauwerken genannt. Anhand dieses Beispiels wird der Stand der Technik und dann auch die Erfindung im folgenden beschrieben.

Auf dem Markt gibt es zwei Komponenten-Injektionswerkstoffe auf Basis zum Beispiel von Polyurethan-, Epoxid-, Silikat-, Polyacrylat- oder Polymethacrylat-Harzen oder - Gelen. Die Komponenten dieser Stoffe bestehen aus mehr oder weniger viskosen Flüssigkeiten, die durch Reaktion miteinander zu festen Reaktionsprodukten aushärten. Diese können dann im beschriebenen Beispiel am sanierten Bauwerk als Abdichtungs-Kunststoffe insbesondere gegen Wasser wirken. Bekanntlich werden diese Stoffe mit Hilfe von sogenannten Injektionspumpen in oder an das zu sanierende Bauwerk gefördert.

Insbesondere bei Injektionsstoffen mit kurzen Reaktionszeiten von zum Beispiel nur wenigen Sekunden bis Minuten ist es für eine sichere Verarbeitung erforderlich, Fördervorrichtungen zu verwenden, bei denen die Einzelkomponenten getrennt gefördert werden. Sie werden dann erst am sogenannten Packer mit Hilfe eines Mischkopfes zusammengeführt und so zur Reaktion gebracht.

In dem beispielhaft beschriebenen Technikbereich sind grundsätzlich zwei verschiedene Bauarten von Fördervorrichtungen bekannt. Beide haben jeweils eine oszillierend translatorisch angetriebene Kolbenpumpe - vorzugsweise eine Kolbenpumpe mit Verdrängerkolben, der später beschrieben wird - für die Förderung jeweils eines Fluids. In der einen bekannten Bauweise ist jede Kolbenpumpe durch einen eigenen Antrieb, zum Beispiel einen pneumatischen "Luftmotor", angetrieben. In der zweiten Bauweise ist ein gemeinsamer Antrieb vorgesehen, der seine oszillierende Translationsbewegung, zum Beispiel durch ein entsprechendes Gestänge, auf die beiden Pumpen verteilt.

Wenn bei der ersten Bauweise die Antriebe als Luftmotoren ausgebildet sind, können diese mittels einer pneumatischen Steuerung wahlweise mit gleich oder unterschiedlich großen Luftströmen angesteuert werden, die dann die Pumpen gleich oder unterschiedlich schnell fördern lassen. So lassen sich verschiedene Mischungsverhältnisse der Komponenten einstellen. Nachteil dieser Bauweise ist, insbesondere bei der Verwendung von Pneumatik und Luftmotoren, daß die Ansteuerung der beiden Antriebe zum Einstellen des Fördervolumenstrom-Verhältnisses genau kalibriert sein muß und störanfällig ist. Spezieller Nachteil dieses Systems bei der Verwendung von in der Bauwerksanierung üblichen mobilen Kolben-Kompressoren sind die nicht zuverlässig konstanten Luftvolumenströme, die - zum Teil nicht korrelierte - Schwankungen der einzelnen Fördervolumenströme nachteilig bewirken. Außerdem können abhängig von den örtlichen Gegebenheiten unterschiedliche Gegendrucke am Mischkopf entstehen, und dies wirkt sich ebenfalls nicht kontrollierbar auf die Fördermenge und das Mischungsverhältnis der Volumenströme aus.

Für ein zuverlässiger konstantes Mischungsverhältnis sorgt da eher die zweite oben genannte bekannte Bauweise mit einem gemeinsamen Antrieb der beiden Pumpen. Insbesondere bei der Verwendung von oszillierenden Pumpen mit jeweils konstruktiv gleichem Fördervolumen pro Hub kann hier wegen des gemeinsamen Antriebes grundsätzlich nur der Gesamtfördervolumen-Strom (zum Beispiel aufgrund eines nicht konstant versorgten pneumatischen Antriebes) schwanken. Nachteilig ist hier aber, daß das Volumenstrom-Verhältnis durch die konstruktive Vorgabe der Pumpen-Hubvolumina festgelegt und nicht einstellbar ist. Dies ist insbesondere dann nachteilig, wenn Volumenstrom-Verhältnisse abweichend von 1:1 erreicht werden sollen. Das 1:1-Verhältnis nämlich läßt sich durch den konstruktiv besonders einfachen Aufbau eines gemeinsamen Antriebs und zwei baugleiche Pumpen erreichen. Schon aber ein von 1:1 abweichendes, nicht einmal einstellbares Verhältnis benötigt dann Pumpen mit unterschiedlichem Fördervolumen pro Hub bei gleicher Hubstrecke.

Die vorliegende Erfindung widmet sich demgegenüber der Aufgabe, eine Vorrichtung zum Fördern von mindestens zwei Fluiden in einem bestimmten Volumenstrom-Verhältnis zu schaffen, die einfach aufgebaut und herstellbar und dennoch anpassungsfähig in ihrer Verwendung ist.

Diese Aufgabe wird von der Vorrichtung mit dem Merkmal des Anspruchs 1 gelöst. Bevorzugte Ausgestaltungen der Vorrichtung sind in den Unteransprüchen angegeben.

Die erfindungsgemäße Vorrichtung dient zum Fördern von mindestens zwei Fluiden - und zwar insbesondere von Fluidkomponenten zu einer Vorrichtung, in der die beiden Fluide zu einem gemeinsamen Fluid vermischt werden, um miteinander zu reagieren und zum Beispiel etwas später auszuhärten. Die erfindungsgemäße Vorrichtung fördert die mindestens zwei Fluide in einem bestimmten Verhältnis ihrer Volumenströme. Dazu weist die Vorrichtung jeweils eine oszillierend angetriebene Pumpe zur Förderung jeweils eines Fluids auf. Die Pumpe kann translatorisch arbeiten und entsprechend ist dann auch der oszillierende Antrieb translatorisch. Die Pumpe kann ein pneumatischer Luftmotor sein, der, von Druckluft angetrieben, seinen Abtrieb (zum Beispiel einen Stab mit einem Flansch) in oszillierendem Wechselhub translatorisch auf und ab bewegt.

Erfindungsgemäß weist mindestens eine der Pumpen eine Übertragung der oszillierenden Antriebsbewegung auf, die einen Streckenanteil jeder Oszillation leer läuft. Dadurch wird von der Pumpe, deren Antriebsübertragung in einem Streckenanteil jeder Oszillation leer läuft, nur ein geringerer Pumpenhub ausgeübt, als von der Pumpe ohne diesen Leerlauf. So läßt sich zum Beispiel bei einer erfindungsgemäßen Vorrichtung mit zwei gleichmäßig oszillierend angetriebenen, im wesentlichen baugleichen Pumpen mit gleichem Hub - die also auf ein Fördern in einem Volumenstrom-Verhältnis von 1:1 eingerichtet ist - durch Aktivierung oder nachträglichen Einbau des erfindungsgemäßen Leerlaufs auch ein anderes Volumenstrom-Verhältnis der geförderten Fluide erreichen.

Vorzugsweise ist der Streckenanteil einstellbar, so daß sich an der erfindungsgemäßen Vorrichtung unterschiedliche Volumenstrom-Verhältnisse einstellen lassen. Besonders bevorzugt ist dabei eine Einstellbarkeit in diskreten Schritten, so daß sich nur bestimmte Volumenstrom-Verhältnisse - zum Beispiel 1:1 und 2:1 und 3:1 und 4:1 - einstellen lassen, die dem Mischungsverhältnis von mit der Vorrichtung geförderten Zwei- (aber auch Mehr-) Komponenten-Werkstoffen entsprechen.

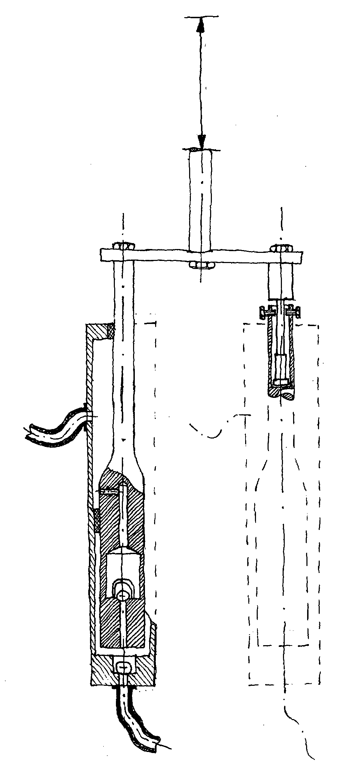

Die vorzugsweise translatorisch arbeitenden und entsprechend angetriebenen Pumpen weisen vorzugsweise einen Verdrängerkolben auf. Dieser wird genauer mit Bezug auf die beigefügte Zeichnung beschrieben. Der Leerlauf wird vorzugsweise zwischen zwei Anschlägen realisiert.

Die Pumpen haben vorzugsweise einen gemeinsamen Antrieb.

Die Erfindung wird im folgenden mit Bezug auf die beigefügte Zeichnung beschrieben.

Die Figur zeigt in teilweise geschnittener Draufsicht die schematische Darstellung einer erfindungsgemäßen Vorrichtung.

Die Figur zeigt eine Vorrichtung **2** zum Fördern von zwei Fluiden **4, 6**. Jedes Fluid **4, 6** ist mit einer Verdrängerkolben-Pumpe **8** gefördert. Die Verdrängerkolben-Pumpen **8** sind - mit Ausnahme ihrer Kolbenstange **10, 12 -** baugleich, so daß sie bei gleichem Kolbenhub einen gleichgroßen Volumenstrom **4, 6** fördern würden.

Die Pumpen **8** sind gemeinsam durch einen oszillierenden Antrieb angetrieben, von dem nur die Abtriebsstange **14** und der Hub **H** dargestellt ist. Der Abtrieb **14** verzweigt sich auf die beiden Kolbenstangen **10, 12** durch eine Mitnehmerplatte **16.**

Die Verdrängerkolben-Pumpen **8** funktionieren folgendermaßen. Dargestellt sind die Verdrängerkolben **18** in ihrem unteren Todpunkt des Hubes **H.** Die Verdrängerkolben **18** laufen jeweils in einem Zylinder **20**, der von dem Verdrängerkolben **18** in eine untere Kammer **22** und eine obere Kammer **24** eingeteilt ist. Dazu läuft der Verdrängerkolben **18** in dem Zylinder **20** in einem Dichtring **26**, und die Kolbenstangen **10, 12** sind durch einen zweiten Dichtring **28** aus dem Kolben **20** herausgeführt.

In der nun folgenden Aufwärtsbewegung ziehen die Verdrängerkolben **18** durch ein sich dabei öffnendes erstes Kugelventil **30** im Boden der Kolben **20** Fluid **4, 6** aus Leitungen **32** in die untere Kammer **22**. Bei der dann folgenden Abwärtsbewegung stoßen die Verdrängerkolben **18** zurück in die untere Kammer **22** (deren Einlaßventil **30** schließt) und verdrängen das Fluid **4** aus der unteren Kammer **22** durch eine Leitung **34**, die durch den Verdrängerkolben **18** führt, in die obere Kolbenkammer **24**. Auch die Leitung **34** weist ein Kugelventil **36** auf, das bei den Druckverhältnissen dieser Abwärtsbewegungsphase des Verdrängerkolbens **18** öffnet.

Bei der nächsten Aufwärtsbewegung der Verdrängerkolben **18** schließt das zweite Kugelventil **36**, so daß der Verdrängerkolben **18** zusätzlich zu dem oben beschriebenen Ansaugen des Fluids **4, 6** in die untere Kolbenkammer **22** das Fluid **4, 6** auch durch jeweils eine zweite Leitung **38** verdrängt und so weiterfördert.

Durch die Baugleichheit der Verdrängerkolben **18** und der Zylinder **20** fördert die Vorrichtung **2** die zwei Fluide **4, 6** unter der Voraussetzung in einem Volumenstrom-Verhältnis von 1:1, wenn die Verdrängerkolben **18** bei jeder Oszillation einen gleichgroßen Hub ausführen. Dies wäre entsprechend dem Stand der Technik gewährleistet, wenn beide Kolbenstangen **10, 12** herkömmlich ausgeführt wären wie die Kolbenstange **10** in der Figur. Dann übertrüge sich der Hub **H** des oszillierenden Antriebs **14** über die Mitnehmerplatte **16** in seinem vollen Außmaß auf beide Pumpen **8.**

Entsprechend der erfindungsgemäßen Vorrichtung **2** der Figur aber ist eine Übertragung **40** der Kolbenstange **12** der in der Figur rechten Pumpe **8** vorgeschaltet. Und die Übertragung läuft einen Streckenanteil **h** jeder Oszillationsbewegung **H** zwischen einem unteren Anschlag **42** und einem oberen Anschlag **44** leer.

Die zwei Anschläge **42, 44** sind durch eine lose axiale Steckverbindung als Übertragung **40** in der Kolbenstange **12** ausgeführt. Die Steckverbindung ist an ihrer weiblichen Seite als axiale glattwandige Zylinderbohrung **45** im Ende der Kolbenstange **12** ausgebildet, in die auf der männlichen Seite ein Zylinderstift **46** gesteckt ist. Bei der Abwärtsbewegung kommt das untere Ende **42** des Zylinderstiftes **46** mit dem Grund **42** der Bohrung in Eingriff und bildet so den unteren Anschlag **42**, um den Verdrängerkolben **18** nach unten zu drücken.

Bei der Aufwärtsbewegung hebt dann das untere Ende **42** des Stiftes **46** vom Grund **42** der Bohrung ab - die Übertragung **40** läuft einen Streckenanteil **h** der Hubbewegung **H** leer - bis die Aufwärtsbewegung in den Eingriff des oberen Anschlags **44** zwischen Schrauben **50 ,** die am oberen Ende der Kobenstange **12** von außen radial in die axiale Bohrung **45** geschraubt sind, und einem aufwärtsweisenden Absatz **48** auf der Mantelfläche des Stiftes **46** kommt.

Auf diese Weise führt der in der Figur rechte Verdrängerkolben **18** einen um den Streckenanteil **h** verringerten Hub aus - und fördert mit jedem Hub einen konstruktiv genau bestimmbaren geringeren Volumenstrom als der in der Figur linke Verdrängerkolben **18,** welcher den gesamten Hub **H** des oszillierenden Antriebs **14** ausführt. Durch konstruktive Einstellung des Leerlauf-Streckenanteils **h** läßt sich erfindungsgemäß vorteilhaft ein bestimmtes Volumenstrom-Verhältnis der geförderten Fluide **4, 6** genau einstellen.

Erfindungsgemäß bevorzugt lassen sich mit der Vorrichtung **2** auch mehrere verschiedene, bestimmte Volumenstrom-Verhältnisse in diskreten Schritten einstellen, indem auf der Mantelfläche des Stiftes **46** auf der männlichen Seite der Übertragung **40** entsprechend viele Absätze (in der Figur zwei Absätze **48** und **52**) mit jeweils unterschiedlichen Außendurchmessern angebracht sind. Durch entsprechende radiale Zustellung der Schrauben **50** kommt dann bei der Aufwärtsbewegung des Hubes **H** entweder der erste Absatz **48** für einen kleineren Leerlauf-Streckenanteil **h** oder der zweite Absatz **52** für einen größeren Leerlauf-Streckenanteil in den Eingriff mit den so zugestellten Schrauben **50**.

In der Position, die in der Figur dargestellt ist, können die Schrauben **50** den Stift **46** auch fest in Eingriff nehmen (durch Klemmung und vorzugsweise durch einen zusätzlichen formschlüssigen Eingriff in einen weiteren Absatz **54**). Bei dieser Einstellung dann läuft die Übertragung **40** nicht mehr leer, und der Hub **H** wird vollständig auch auf den in der Figur rechten Zylinder **18** für ein Volumenstrom-Verhältnis 1:1 vollständig übertragen.

## Patentansprüche

1. Vorrichtung zum Fördern von mindestens zwei Fluiden, insbesondere Fluidkomponenten, in einem bestimmten Volumenstrom-Verhältnis der Fluide
mit jeweils einer oszillierend angetriebenen Pumpe für die Förderung jeweils eines Fluids,
**dadurch gekennzeichnet, daß**
mindestens eine der Pumpen (8) eine Übertragung (40) der oszillierenden Antriebsbewegung (H) aufweist, die einen Streckenanteil (h) jeder Oszillation (H) leer läuft.

2. Vorrichtung nach Anspruch 1, **dadurch gekennzeichnet, daß** die Übertragung (40) den Streckenanteil (h) jeder Oszillation (H) zwischen zwei Anschlägen (44) leer läuft.

3. Vorrichtung nach einem der vorhergehenden Ansprüche, **dadurch gekennzeichnet, daß** die Pumpen (8) translatorisch arbeiten und angetrieben sind und daß die mindestens eine Pumpe (8) eine Übertragung (40) der Antriebsbewegung (H) aufweist, die einen Streckenanteil (h) jeder Translation (H) zwischen zwei Anschlägen (44) leer läuft.

4. Vorrichtung nach einem der vorhergehenden Ansprüche, **dadurch gekennzeichnet, daß** die Pumpe (8) einen Verdrängerkolben (18) aufweist.

5. Vorrichtung nach einem der vorhergehenden Ansprüche, **dadurch gekennzeichnet, daß** der Streckenanteil (h) einstellbar ist.

6. Vorrichtung nach Anspruch 5, **dadurch gekennzeichnet, daß** der Streckenanteil (h) in diskreten Schritten (48, 52, 54) einstellbar ist.

7. Vorrichtung nach einem der vorhergehenden Ansprüche, **dadurch gekennzeichnet, daß** die Pumpen (8) einen gemeinsamen Antrieb (14) aufweisen.

8. Vorrichtung nach einem der vorhergehenden Ansprüche, **dadurch gekennzeichnet, daß** der oszillierende Antrieb (14) ein Luftmotor ist.
